# EUROPEAN PATENT SPECIFICATION

(11) **EP 4 613 689 B1**
(45) Date of publication and mention of the grant of the patent: **07.10.2026**
(21) Application number: 25161191.9
(22) Date of filing: 03.03.2025
(51) Int. Cl.: B66B 7/12

(54) **METHOD AND SYSTEM FOR WEAR MONITORING OF STEEL WIRE ROPES**
VERFAHREN UND SYSTEM ZUR VERSCHLEISSÜBERWACHUNG VON STAHLDRAHTSEILEN
PROCÉDÉ ET SYSTÈME DE SURVEILLANCE D'USURE DE CÂBLES DE FILS D'ACIER

(30) Priority: 04.03.2024 IT 202400004738
(43) Date of publication of application: 10.09.2025
(73) Proprietor: Prysmian S.p.A., 20126 Milano (IT)
(72) Inventor: Di Stefano, Antonio, 90141 Palermo (IT)
(74) Representative: Cevini, Gaia

(56) References cited:
- JP-B2- 7 341 922
- US-A1- 2019 202 667
- US-B2- 9 731 939

## Description

### Technical field

The present invention relates to the field of steel wire ropes used in, e.g., elevators, cranes, and, in general, transportation systems. In particular, the present invention relates to a method for monitoring the wear of steel wire ropes. The present invention also relates to a system implementing the method for the wear monitoring of steel wire ropes and to an elevator system comprising such system.

### Background art

As known, elevator systems, as well as cranes and, in general, transportation systems may utilize steel wire ropes (possibly arranged into belts) to move and hold the car or basket. These applications require the steel wire ropes to be accurately and reliably monitored as to their wear conditions. The monitoring of the steel wire ropes, in particular, needs to be continuous and automated in order to guarantee the safety of the transportation system.

Currently, the condition of steel wire ropes is assessed by spot monitoring (i.e. from time to time) and by employing manual technologies and human experts. The assessment of the ropes' condition is in fact made by using, mainly, visual inspection or magneto-inductive technologies.

However, in some cases, these approaches cannot be used at all or are not able to assess the wear level of a steel wire rope along its entire length. Specifically, visual inspection cannot be carried out for jacketed ropes/belts (where ropes or belts are embedded in an elastomeric medium), and magneto-inductive methods cannot reach and monitor the rope or belt ends, due to the volume and structure of the fastening fixtures. Both these problems are particularly critical when monitoring the conditions of an elevator's ropes or belts, where both criticalities are often encountered.

Alternative techniques have been proposed to overcome these limitations and automate the monitoring operations, such as techniques based on the measurement of the rope electrical resistance or impedance. Indeed, as known, the rope electrical resistance or impedance is influenced by the rope's wear level, which reduces the rope's diameter, and hence the resistance or impedance measurement may give an indication of the rope's condition.

EP 2958844 B1 discloses a method of fault detection of a belt or rope which includes connecting a fault detection unit to at least a portion of a belt or rope including a plurality of wires arranged in a plurality of strands and/or cords. At least the portion of the belt or rope is subjected to an AC voltage of high frequency range and an electrical impedance of the portion of the belt or rope is measured via the fault detection unit. Using at least the measured electrical impedance of the portion of the belt or rope, a fault condition of the belt or rope is determined.

US 7653506 B2 discloses a system and method for monitoring the health of a support structure for an elevator based on an electrical characteristic, such as resistance, of the support structure and not the temperature of the structure. The resistance of a virgin support structure under the same temperature conditions as the support structure being monitored is calculated and subtracted from the measured resistance of the monitored support structure. The resistance value of the virgin support structure and the monitored support structure may be translated to a reference temperature to simplify calculations and monitoring of the support structure.

US 8813918 B2 discloses an elevator support monitoring device in an elevator system and a method for monitoring an elevator support characterizing property, preferably an electrical resistance, of the elevator support or of a tension support of the elevator support for a sudden change in the characterizing property. A state of the elevator support is determined by evaluating several consecutive, sudden changes in the characterizing property. US 9 731 939 B2 shows a method and a system for monitoring the wear of a steel wire rope according to the preambles of claims 1 and 11, respectively, by measuring its electrical impedance through a fault detection unit connected to a portion of the rope.

### Summary of the invention

The inventor noticed that the techniques disclosed herein above do not allow to achieve precise, repeatable, reliable, quantitatively accurate and robust assessments of the wear of steel wire ropes used for example in elevator systems. Indeed, the accuracy of the wear assessment depends on a number of factors, such as:
- the resistance or impedance variation due to wear is very small compared to the rope's resistance or impedance (the actual wear of the rope usually causes a resistance variation in the range of a fraction of a mΩ);
- the impedance may change in a significant way due to the occasional proximity of external objects, generating parasitic capacitance and inductance, which may hinder the contribution due to wear in the impedance variation;
- the rope resistance and impedance may be strongly influenced by the environmental conditions (temperature and hotspot), which may cause a significant variation in the measured resistance or impedance, typically greater than the variation caused by the actual wear of the rope;
- typically, the resistance or inductance measurement is affected by electromagnetic noise and interference, due to the rope's length, conductivity and proximity to electrical apparatuses.

As an example, a 10 m steel wire rope of 2 mm diameter (as the one typically used in elevator belts, commonly called also "strength bearing member") has a resistance of about 1 Ω. The breaking of just one wire changes the resistance of about 10-30 µΩ. To resolve this quantity, the measurement system must guarantee a very small resolution and a very low noise floor. For longer or thicker ropes, the needed resolution can be even smaller. Moreover, the variation of resistance due to a change in temperature can be 100 times larger than the variation due to wear, making extremely difficult determining the wear level.

In view of the above, the Applicant has tackled the problem of providing a method for monitoring the wear of steel wire ropes which allows to obtain a more precise and reliable wear assessment than the known methods based on resistance or impedance measurement.

The inventor observed that steel wire ropes have an inhomogeneous structure, being made by a plurality of steel wires, arranged in various strands. According to the present disclosure, a steel wire rope can have different shapes and dimensions, including single spiral strands or ropes comprising multiple strands (with or without a rope core). Moreover, as said before, a steel wire rope according to the present disclosure can be included in a belt, such as small cords in elevator belts. In some cases, the rope core is made of a different material compared to the steel wires. Also, in some applications (e.g. in elevators belts), each wire is plated with a different metal, such as zinc, that acts as a solid lubricant. Different materials may have a different resistivity, so there is a certain probability that, when measuring the overall rope impedance or resistance with volt-amperometric methods, the current will mostly flow in some materials and not in others. This, in some cases, may reduce the sensitivity of the measurement. Usually, the external surface of wires is more subject to wear (erosion, breaking, etc.), as well the wire zinc coating. This suggests that to increase the sensitivity in a resistance-based (or, in general, inductance-based) measurement, it is useful to force the current flow close to the rope's external surface, or, in general, in a predetermined section close to the external surface. A physical phenomenon that can be exploited to this purpose is the skin effect, that can be achieved by using an alternating current (AC) at suitable frequencies. This effect localises the current closer to the surface as the frequency increases. Since the steel of the rope is ferromagnetic (usually with a relative permeability of µr≈100), a suitable skin effect can be achieved at relatively low frequencies (<50 kHz).

Therefore, according to the present invention, the problem above is solved by a method for monitoring the wear of steel wire ropes which exploits the known skin effect associated with the passage of an alternating current inside the rope to evaluate variations on the material structure (over the cross-section) during the rope life. This technique is well suited for structured and inhomogeneous media, such as a typical steel wire rope, which usually comprises smaller wires. As it will be explained in more detail herein after, the method of the present invention has several additional advantages: it allows to intrinsically compensate for the temperature variation, to effectively reject electromagnetic noise and to resolve very small changes in the rope resistance (and, consequently, to detect, and localize, very small changes in the structure of the rope). Due to the ferromagnetic properties of the steel wire ropes, the desired depth of the skin effect can be induced at relatively low frequencies (namely, lower than 50 kHz), thus simplifying the electronics required by the circuits of the system of the present invention.

According to a first aspect, the present invention provides a method for monitoring the wear of a steel wire rope, the steel wire rope including a plurality of steel wires, the method comprising, at a first time:
a) generating a current at a base frequency and determining a first base value of an electrical parameter of the steel wire rope indicating an opposition of the steel wire rope to the passage of the current;
b) generating a current at a test frequency higher than the base frequency and determining a first test value of the electrical parameter of the steel wire rope indicating an opposition of the steel wire rope to the passage of the current;
   and, at a second time following the first time:
c) generating a current at the base frequency and determining a second base value of the electrical parameter of the steel wire rope;
d) generating a current at the test frequency and determining a second test value of the electrical parameter of the steel wire rope;
   the method further comprising:
   e) determining a first coefficient based on the first base value and the first test value of the electrical parameter of the steel wire rope;
   f) determining a second coefficient based on the second base value and the second test value of the electrical parameter of the steel wire rope;
   g) determining, using the first coefficient and the second coefficient, a wear level of the steel wire rope.

According to embodiments of the method, the electrical parameter is an impedance or a resistance of the steel wire rope. In particular, according to many embodiments of the method, the electrical parameter is the resistance of the steel wire rope.

According to embodiments of the method, the first coefficient is a ratio between the first test value and the first base value of the electrical parameter and the second coefficient is a ratio between the second test value and the second base value of the electrical parameter.

According to embodiments of the method, the ratio between the test frequency and the base frequency is greater than 1.1.

According to embodiments of the method, the base frequency and the test frequency are fixed frequencies. According to other embodiments, the base frequency is a fixed frequency and the test frequency is selected in such a way that the ratio has a fixed value.

According to embodiments of the method, it further comprises:
providing a set of test frequencies comprising a number, N, of test frequencies, N being an integer greater than 1, wherein each test frequency is higher than the base frequency;
at the first time, for each test frequency comprised in the set of test frequencies, performing step b);
at the second time, for each test frequency comprised in the set of test frequencies, performing step d);
determining, for each test frequency comprised in the set of test frequencies, a respective first coefficient based on the first base value and a respective first test value of the electrical parameter of the steel wire rope and a respective second coefficient based on the second base value and a respective second test value of the electrical parameter of the steel wire rope; and
determining, using the first coefficients and the second coefficients, a wear level of the steel wire rope.

The ratio between each test frequency and the base frequency may be greater than 1.1.

According to embodiments of the method, each of said determining the first base value, determining the first test value, determining the second base value and determining the second test value of the electrical parameter comprises:
acquiring a voltage across the steel wire rope;
providing an in-phase component of the voltage by multiplying the voltage by the current and integrating over a measurement interval;
providing a quadrature component of the voltage by multiplying the voltage by a 90° phase-shifted version of the current and integrating over the measurement interval;
providing an amplitude of the voltage based on the in-phase component and the quadrature component of the voltage; and
computing the impedance or resistance as a ratio between the amplitude of the voltage and an amplitude of the current.

According to embodiments of the method, step g) comprises computing a difference between the first coefficient and the second coefficient and, based on the difference, determining whether a variation within the structure of the steel wire rope has occurred between the second time and the first time.

According to embodiments of the method, determining a wear level of the steel wire rope comprises mapping the difference to the wear level by means of any one of: an analytic function, a look-up table, a machine learning algorithm.

According to embodiments of the method, the wear level indicates a residual load of the steel wire rope.

The base frequency may be selected between 0 Hz and 1 kHz. According to embodiments of the method, the base frequency is the DC frequency (0 Hz). According to other embodiments, the base frequency is an AC frequency that may be selected between 10 Hz and 1 kHz.

According to a second aspect, the present invention provides a system for monitoring the wear of a steel wire rope, the system comprising:
- a processing unit; and
- a current generator;
   wherein the current generator is configured to generate a current at a base frequency and to generate a current at a test frequency higher than the base frequency,
   wherein the processing unit is configured to:
      - determine a base value of an electrical parameter of the steel wire rope indicating an opposition of the steel wire rope to the passage of the current at the base frequency, and a test value of
      the electrical parameter indicating an opposition of the steel wire rope to the passage of the current at the test frequency, and
   - determine a coefficient based on the base value and the test value of the electrical parameter of the steel wire rope, and
   wherein the processing unit is further configured to determine a wear level of the steel wire rope using the coefficient as determined at a first time and the coefficient as determined at a second time following the first time.

According to a third aspect, the present invention provides an elevator system comprising a steel wire rope and a monitoring system for monitoring the wear of the steel wire rope as set forth above.

According to embodiments of the of the elevator system, the elevator system comprises a belt including a plurality of steel wire ropes, wherein at least two steel wire ropes are electrically connected in series with each other and electrically connected to the monitoring system.

### Brief description of the drawings

The present invention will become clearer from the following detailed description, given by way of example and not of limitation, to be read with reference to the accompanying drawings, wherein:
- Figure 1 schematically shows an exemplary elevator system;
- Figure 2 is a block scheme of a system for wear monitoring of steel wire ropes according to an embodiment of the present invention;
- Figure 3 is a flowchart illustrating steps of the method for wear monitoring of steel wire ropes according to an embodiment of the present invention;
- Figure 4 is a flowchart illustrating further steps of the method for wear monitoring of steel wire ropes according to an embodiment of the present invention; and
- Figure 5 shows a graph correlating a resistance of an exemplary steel wire rope with a residual load thereof.

### Detailed description of preferred embodiments of the invention

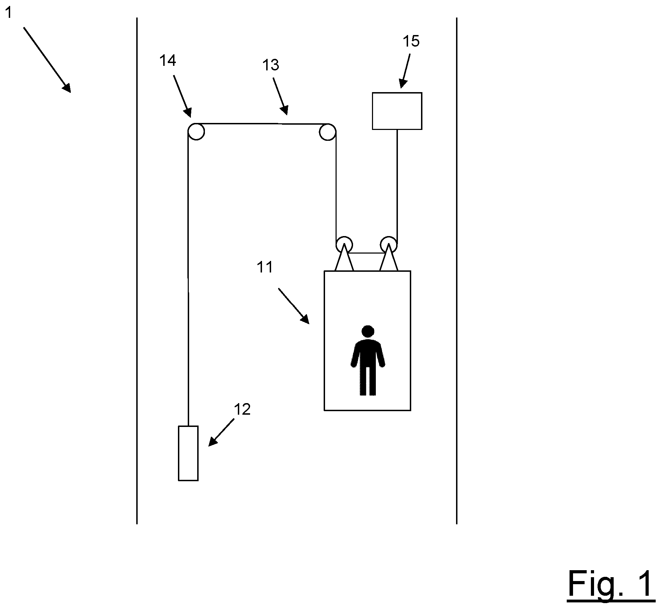

Figure 1 schematically shows an exemplary elevator system 1. The elevator system comprises a car 11 and a counterweight 12, which are moved by, typically, a motor (not shown in the drawings) and a traction system comprising one or more belts 13 and pulleys 14. The components of a typical elevator system are known, and they will not be further described herein after. The elevator system 1, in particular the belt 13, is connected to a monitoring system 15 suitable for monitoring the wear of the belt's ropes according to embodiments of the present invention.

The belt 13 comprises steel wire ropes (which will be indicated with the same reference number 13). Each steel wire rope 13 of the elevator system comprises a plurality of steel wires, which may be stranded into cords, and a jacket enclosing the cords. The jacket may be of a polymeric material, for example an elastomeric material.

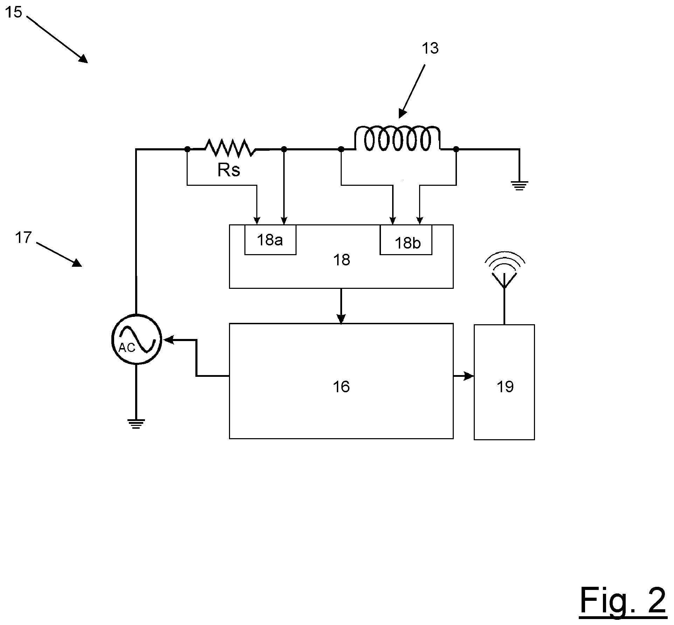

Figure 2 shows a block scheme of the monitoring system 15 according to an embodiment of the present invention. The monitoring system 15 is electrically connected to the belt, for example at one end of the belt to be monitored. It is configured to assess a wear condition of a steel wire rope 13 of the belt by implementing the monitoring method of the present invention.

The monitoring system 15 comprises a processing unit 16, a current generator 17, an acquisition unit 18, and a communication unit 19, preferably comprising a radio/mobile modem.

The processing unit 16 comprises a microcontroller and/or a DSP (Digital Signal Processor) or an FPGA (Field Programmable Gate Arrays) and a memory (not shown in the drawings). The processing unit 16 is connected to the current generator 17, to the communication unit 19 and to the acquisition unit 18.

The processing unit 16 is configured to implement the monitoring method according to the present invention as well as data processing operations. The monitoring method will be described herein after. Besides, the processing unit 16 is configured to send the output of the monitoring method to the communication unit 19 as monitoring data messages or logs and/or alarms.

The current generator 17 preferably comprises a low frequency sinusoidal oscillator, usually implemented digitally as a Direct Digital Synthesizer (DDS). It can be controlled in amplitude and frequency in the range 0.1 V - 5 V and 1 Hz - 50 kHz. The amplitude of the voltage may be equal to a few Volts. A direct current (DC) or an alternating current (AC) is generated starting from the voltage by using an active voltage-to-current converter, or by using a resistor Rs (as schematically shown in Figure 2). The current amplitude may be about 1 mA - 10 mA.

The current signal (or the voltage signal across the resistor Rs) is acquired by the acquisition unit 18 together with the voltage signal across the steel wire rope 13 (which, in the block scheme of Figure 2, is represented as an inductor). The acquisition unit 18 preferably comprises a two-channels synchronous high-resolution Analog to Digital Converter (ADC), featuring, for example, a resolution of about 24 bits and a sampling frequency up to 100 kHz. In this case, a first channel 18a of the acquisition unit 18 is used to acquire the current signal and a second a channel 18b is used to acquire the voltage signal.

The monitoring method according to the present invention provides for performing a sequence of steps, which is preferably repeated over time, at least at two different times, and which comprises, at a first time:
- at each frequency of a set of considered frequencies comprising a first "base" frequency (in particular, a relatively low frequency or the DC frequency, namely 0 Hz) and at least one second "test" frequency, which is higher than the first frequency, determining a respective value of an electrical parameter indicating an opposition of the steel wire rope to the passage of the current at the considered frequency (for instance, the impedance or its real part, namely the resistance, of the steel wire rope);
- on the basis of said values of the electrical parameter, determining first coefficients indicative of the skin effect caused by the passage of the current within the considered steel wire rope at the considered test frequencies; and
   at a second time following the first time:
   - at the same frequencies, determining second values of the electrical parameter; and
   - on the basis of the second values of the electrical parameter, determining second coefficients indicative of the skin effect caused by the passage of the current within the considered steel wire rope at the considered test frequencies.

According to embodiments of the method, the electrical parameter is the impedance or the resistance of the steel wire rope. In particular, measuring the resistance is advantageous because the reactance is influenced by the proximity of conductive objects to the steel wire rope that is monitored, which is an undesired effect that may reduce the sensitivity of the method. As it will be appreciated by the skilled person, when the base frequency is selected to be zero, the electrical parameter that is determined according to these embodiments of the method is the resistance of the steel wire rope.

The set of considered frequencies, as anticipated above, comprises a first frequency indicated also as "base frequency", which is a fixed low frequency, and a number N of further higher frequencies, indicated also as "test frequencies", N being an integer equal to or greater than 1. The base frequency may be selected within the range 0 Hz - 1 kHz. In particular, the base frequency may be the DC frequency or an AC frequency which is selected within the range from 1 Hz to 1 kHz, preferably from 10 Hz to 1 KHz. According to embodiments of the method of the present invention, the ratio between anyone of the test frequencies and the base frequency is greater than 1.1.

The method provides for associating with each test frequency a respective coefficient (the coefficient will be indicated as "skin effect coefficient" or SEC), which is determined on the basis of two values of the electrical parameter of the steel wire rope: a base value which is determined by generating a current at the base frequency and evaluating the current signal and the voltage signal across the steel wire rope, and a test value which is determined by generating a current at the considered test frequency and evaluating the current signal and the voltage signal across the steel wire rope. According to embodiments of the method, the skin effect coefficient associated with a test frequency is the ratio between said test value and said base value of the electrical parameter.

As it will be appreciated by the skilled person, the skin effect, as the frequency increases, reduces the cross-sectional area of the rope which is available for conducting the current, whose density is larger near the outer surface of the rope and decreases towards the inside of the rope. At a base frequency equal to 0 Hz, no skin effect is present and hence the whole cross-sectional area of the rope is available for conducting the current.

The method further provides for comparing the skin effect coefficients computed at a first time (which is considered as a reference time) by applying a sequence of steps comprising the operations described above with the skin effect coefficients computed at a second time following the reference time during the operation of the steel wire rope, by applying another sequence of steps comprising the operations described above to determine a wear level of the steel wire rope to be monitored, as it will be described herein after. The sequence of steps applied at the reference time will be indicated as reference measurement phase, while the sequence of steps applied at any subsequent time during the operation of the steel wire rope will be indicated simply as measurement phase. The skin effect coefficients computed at the reference time will be indicated as reference skin effect coefficients.

According to embodiments of the present invention, the set of considered frequencies may be all pre-defined by an operator before applying the method for monitoring the steel wire rope at the reference time. The frequencies may thus have pre-defined fixed values. According to these embodiments, the test frequencies may be selected within the range from 100 Hz to few tens of kHz.

According to these embodiments of the present invention, the reference measurement phase may be performed when the steel wire rope 13 is installed in working configuration, for example in the elevator system 1 before the elevator system 1 is put into operation. Alternatively, the reference measurement phase may be performed at a predefined time during the operation of the elevator system 1.

According to these embodiments, the reference measurement phase of the method provides for:
- at each of the considered, fixed, frequencies, generating a respective current signal and determining the value of the considered electrical parameter (for instance, the impedance or the resistance of the steel wire rope); and
- for each of the test frequencies, determining a respective reference value of the skin effect coefficient, as, e.g., the ratio between the test value and the base value of the electrical parameter.

According to other embodiments of the present invention, the base frequency has a pre-defined fixed value and the test frequencies are defined, during the reference measurement phase, by specifying a set of fixed values for the reference skin effect coefficients. **In** other words, each test frequency is selected in such a way that the associated skin coefficient is equal to a respective fixed value; if the skin effect coefficient is the ratio between the test value and the base value of the electrical parameter, the fixed values may be rational numbers greater than 1 (e.g. 1.5, 2, 2.5, 3, and so on, up to, for instance, 10); for instance, the first test frequency may be selected in such a way that the associated reference skin effect coefficient is equal to 1.5. It is to be noticed that this skin effect coefficient is necessarily greater than 1 due to the skin effect, which, as the frequency increases, reduces the cross-sectional area of the rope which is available for conducting the current, and so increases the impedance/resistance.

Also in this case, the reference measurement phase may be performed when the steel wire rope 13 is installed in working configuration, for example in the elevator system 1 before the elevator system 1 is put into operation. Alternatively, the reference measurement phase may be performed at a predefined time during the operation of the elevator system 1.

According to these embodiments, the reference measurement phase of steps of the method provides for:
- defining a set of frequencies comprising a base frequency and one or more test frequencies (higher than the base frequency);
- at each of the defined frequencies, generating a respective current signal and determining the value of the considered electrical parameter (for instance, the impedance or the resistance of the steel wire rope); and
- for each of the test frequencies, determining a respective reference value of the skin effect coefficient), as, e.g., the ratio between the test value and the base value of the electrical parameter.

As already anticipated above, a second sequence of steps of the method, which is referred to as measurement phase is performed at a time following the reference time, to assess the wear condition of the steel wire rope 13 during the operation of the elevator system 1. The measurement phase has a duration of a few seconds. The measurement phase may be periodically repeated over time at a predefined repetition rate during the operation of the elevator system 1 (e.g. every few minutes or few hours). Alternatively, the measurement phase may be repeated spot-wise during the operation of the elevator system 1.

At each repetition of the measurement phase, the method provides for computing a set of skin effect coefficients at the same frequencies that have been considered during the reference measurement phase and for comparing the computed skin effect coefficients with the reference skin effect coefficients. As it will be described in more detail herein after, such comparison allows to discriminate between variations affecting the electrical parameter of the steel wire rope caused by temperature (when the skin effect coefficients are "similar" over time, within a predefined tolerance) from variations affecting the electrical parameter caused by structural changes (when the skin effect coefficients change over time) and hence by, possibly, wear. When a structural variation is detected, the values of the electrical parameter are used to quantitatively evaluate the wear condition in terms of a wear level of the steel wire rope, which in turns may be a function of, or expressed as, for instance, a residual load, an expected life, and so on. The outcome of each measurement phase may be provided to a monitoring center or similar, to monitor the wear condition of the steel wire rope and possibly to generate a warning or alarm when such condition becomes critical.

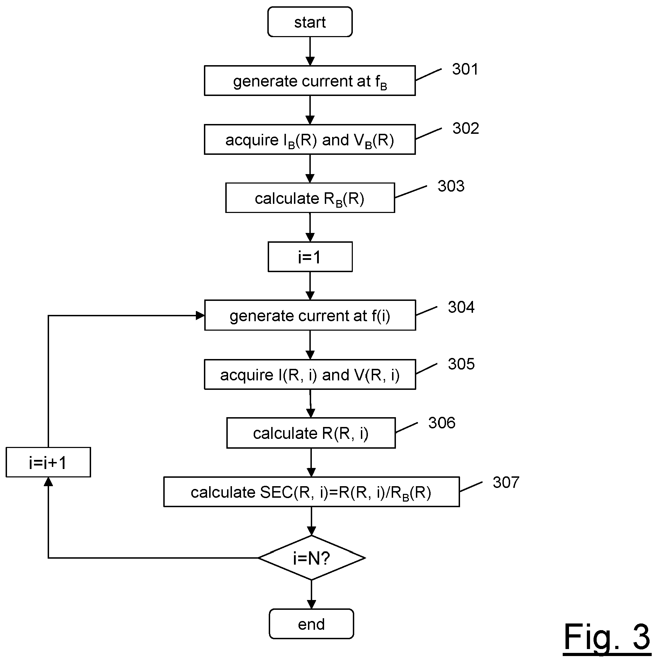

A reference measurement phase will now be described in more detail with reference to the flowchart of Figure 3 which illustrates the steps of the reference measurement phase according to embodiments of the method of the present invention. According to these embodiments of the method, the considered electrical parameter is the resistance of the steel wire rope, while the skin effect coefficient is defined as the ratio between the test value and the base value of the resistance, as it will be described herein below. According to these embodiments, the reference measurement phase comprises the following steps:

| | |
|---|---|
| step 301: | by the current generator 17, generating a base current at the base frequency f_{B} (which may be selected within the range between 0 Hz and 1 kHz, for example within the range from 10 Hz to 1 kHz); |
| step 302: | by the acquisition unit 18, acquiring a base current signal I_{B}(R) and a base voltage signal Vs(R) across the steel wire rope 13; |
| step 303: | by the processing unit 16, determining the rope resistance, from the acquired base current and base voltage signals; the resistance value determined at this step will be referred to as "base value of resistance" or "base resistance" and indicated as R_{B}(R); |
| step 304: | by the current generator 17, generating a current at the first test frequency f(1) higher than the base frequency f_{B} (e.g. >10 kHz); |
| step 305: | by the acquisition unit 18, acquiring a first current signal I(R, 1) and a first voltage signal V(R, 1) across the steel wire rope 13; |
| step 306: | by the processing unit 16, determining the rope resistance, which will be referred to as "first test value of resistance" or "first test resistance" and indicated as R(R, 1); |
| step 307: | by the processing unit 16, calculating a first reference skin effect coefficient SEC(R, 1) as the ratio between the first test resistance R(R, 1) and the base resistance R_{B}(R). |

It is to be noticed that the order of steps described above is not limiting. Indeed, steps 301-303 and steps 304-306 may be performed in the order described herein above but also in a reverse order, namely steps 304-306 may be performed before steps 301-303.

At steps 302 and 305, the acquisition of the current signal and the voltage signal may be performed by acquiring samples of the two signals over a time interval of about few seconds (e.g. from 1 s to 10 s). The acquired samples may be stored in the memory of the processing unit and processed later to determine the rope resistance, or they may be processed in real-time to reduce the memory storage requirement.

Steps 304-306 and step 307 may be repeated a number N-1 of times (if N is an integer number greater than 1) by generating a i-th current at a i-th test frequency f(i) (i=2, ..., N) and calculating a i-th reference skin effect coefficient SEC(R, i) as the ratio between the i-th test resistance R(L, i) and the base resistance R_{B}(R). At each i-th repetition, the considered test frequency is higher than the test frequency at the preceding (i-1)-th repetition. As the frequency increases, also the reference skin effect coefficient increases due to the skin effect already described above.

As anticipated above, the first test frequency f(1) may be a fixed frequency. According to these embodiments, each possible test frequency f(i), i=1, ..., N, is a fixed frequency which is pre-defined by the operator.

According to other embodiments, the first test frequency f(1) may be selected in such a way that the ratio between the first test resistance R(R, 1) and the base resistance R_{B}(R) is equal to a first fixed value (namely, a rational number greater than 1), for instance equal to 1.5. According to these embodiments of the present invention, each i-th test frequency may be selected in such a way that the respective ratio between the i-th test resistance R(R, i) and the base resistance R_{B}(R) is equal to a i-th fixed value. At each i-th test frequency, the reference skin effect coefficient SEC(L, i) is greater than the reference skin effect coefficient SEC(L, i-1) associated with the (i-1)-th test frequency. For instance, considering a number N=5 of test frequencies, five frequencies may be selected in such a way that the corresponding reference skin effect coefficients assume the five following fixed values: 1.5, 2, 2.5, 3, 3.5.

According to these embodiments, the definition of the first test frequency f(1) is performed by implementing a recursive computation of the corresponding reference skin effect coefficient (namely, implementing recursively steps 304-307) starting from an initial fixed value of the first test frequency and then possibly stepping up the frequency value until the computed reference skin effect coefficient is equal to the desired fixed value, e.g. 1.5. The same procedure may be performed for each test frequency to be considered.

According to embodiments of the method of the present invention, at the end of the reference measurement phase, the values of the base and test frequencies f_{B}, f(1) and f(i), i=2, ..., N, and the corresponding reference skin effect coefficients SEC(R, 1) and, possibly, SEC(R, i), i=2, ..., N may be stored in the memory of the processing unit 16. According to other embodiments, the reference skin effect coefficients SEC(R, 1) may be computed at a different time following the reference time, for instance during a subsequent measurement phase. In this case, at the end of the reference measurement phase, the memory of the processing unit 16 may store the values of the frequencies, the test resistances R(R, i), i=1, ..., N, and the base resistance R_{B}(R).

Hence, during the reference measurement phase, a base frequency is applied at a relatively low frequency (for instance, from 10 Hz to 1 kHz), then other higher frequencies (the test frequencies referred to above) are applied. This same set of frequencies is then used during the measurement phase, when the variability of the skin effect coefficients is checked, as it will be described herein below.

It is to be noticed that the frequencies of the current generator 17 may range from a very low value to some tens of kHz. In this frequency range, due to the ferromagnetic properties of the steel wire rope, the skin depth varies between nearly the whole radius of the rope (which means that there is almost no skin effect) to less than about 100 µm.

The generated current is applied to the steel wire rope and then the current and the voltage across the steel wire rope are acquired to determine the resistance. This implies that the steel wire rope is accessed by the two ends. The return path of the current may be made through an already present metallic structure or a return wire. If the belt comprises two or more steel wire ropes, the measurement can be done at the near end by connecting in series two ropes at the far end. In this case, the measurement determines the average wear level of the two ropes.

At steps 303 and 306 of the reference measurement phase described above, the processing unit 16 preferably determines the rope impedance and, in particular, the rope resistance. When AC frequencies are considered, this calculation can be performed by implementing a procedure which is similar to the one performed by a known lock-in amplifier (also indicated as signal projection technique): the voltage signal V(t) is multiplied by the current signal and by its 90° phase-shifted version; then both the quantities are integrated over the measurement interval. This operation gives the projection of the voltage signal on the in-phase and in-quadrature component of the current signal (which are indicated as li(t) and Iq(t), respectively). Starting from these two components, the resistance and reactance may be calculated. The projection operation is equivalent to a very narrow band-pass filter, and it allows to reject most of the environmental noise from the measures and to increase the precision and sensitivity thanks to the integration. To increase the accuracy, the integration interval (i.e. the measurement interval) may be extended over a longer period.

The projection Vi of the voltage on the in-phase current signal li(t) and the projection Vq of the voltage on the quadrature current signal Iq(t) can be calculated as follows: $Vi = {\int }_{0}^{T} \frac{Ii \left(t\right) V \left(t\right)}{\left‖Ii\right‖}$ $Vq = {\int }_{0}^{T} \frac{Iq \left(t\right) V \left(t\right)}{\left‖Iq\right‖} dt$ where, for x=i, q: $\left‖x\right‖ = \sqrt{\frac{1}{T} {\int }_{0}^{T} Ix {\left(t\right)}^{2} dt}$ is the energy of the current signal (in-phase component and in-quadrature component, respectively) and T is the selected integration interval (usually comprising several AC cycles, up to few seconds).

The impedance, resistance and reactance of the rope can be calculated as follows: $Z = \frac{\left|V\right|}{\left|I\right|} {e}^{- j \left(ωt+θ\right)} = R + jX$ where Z is the rope impedance, R is the rope resistance and X is the rope reactance and where: $\left|V\right| = \sqrt{{Vi}^{2} + {Vq}^{2}}$ $\left|I\right| = \sqrt{{Ii}^{2} + {Iq}^{2}}$ $θ = arctan \left(\frac{Vq}{Vi}\right)$ $\left|Z\right| = \frac{\left|V\right|}{\left|I\right|}$ $R = \left|Z\right| ⋅ cos \left(θ\right)$ $X = \left|Z\right| ⋅ sin \left(θ\right) .$

The current Ii (in-phase component), according to the scheme of Figure 2, can be calculated as the voltage across the Rs resistor divided by the value of Rs. The current Iq (quadrature component) can be derived from the in-phase component Ii by applying a hardware or software 90° phase shifter filter (not shown in Figure 2).

It is to be noticed that when the DC frequency is considered as base frequency, the base resistance may be calculated from the generated current signal and the voltage signal across the steel wire rope (which are constant signals) by applying the Ohm's law.

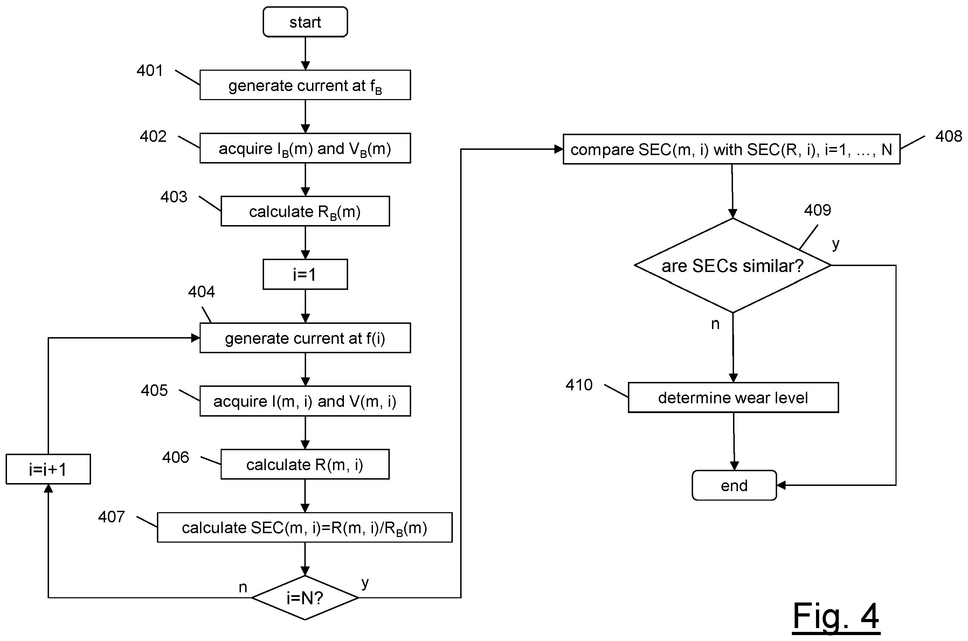

Figure 4 illustrates in more detail the steps of the measurement phase according to embodiments of the method of the present invention. The measurement phase is started by setting and activating the current generator 17 to generate currents at the frequencies that have been considered during the reference measurement phase.

According to these embodiments of the method, in conformity with what has been described above for the reference measurement phase, the electrical parameter is the resistance of the steel wire rope, while the skin effect coefficient is defined as the ratio between the test and base values of resistance, as it will be described herein below. According to these embodiments, the measurement phase comprises the following steps:

| | |
|---|---|
| step 401: | by the current generator 17, generating a reference current at the base frequency f_{B}; |
| step 402: | by the acquisition unit 18, acquiring a base current signal Is(m) and voltage signal Vs(m) across the steel wire rope 13; |
| step 403: | by the processing unit 16, determining the base resistance R_{B}(m); |
| step 404: | by the current generator 17, generating a current at the first test frequency f(1); |
| step 405: | by the acquisition unit 18, acquiring a first current signal I(m, 1) and a first voltage signal V(m, 1) across the steel wire rope 13; |
| step 406: | by the processing unit 16, determining the first test resistance indicated as R(m, 1); |
| step 407: | by the processing unit 16, calculating a first skin effect coefficient SEC(m, 1) as the ratio between the first test resistance R(m, 1) and the base resistance R_{R}(m). |

It is to be noticed that the order of steps described above is not limiting. Indeed, steps 401-403 and steps 404-606 may be performed in the order described herein above but also in reverse order, namely steps 304-306 may be performed before steps 401-403.

As already mentioned above, the acquisition of the current signal and the voltage signal may be performed by acquiring samples of the two signals over a time interval of about few seconds (e.g. from 1 s to 10 s). The acquired samples may be stored in the memory of the processing unit 16 and processed later to determine the rope resistance or they may be processed in real-time to reduce the memory storage requirement. At steps 403 and 406 of the measurement phase described above, the rope resistance is computed by the processing unit as already described above with reference to steps 303 and 306 of the flowchart of Figure 3.

Steps 404-407 are preferably repeated a number N-1 of times, N being the number of test frequencies.

At the end of the measurement phase, the skin effect coefficients SEC(m, 1) and, possibly, SEC(m, i), i=2, ..., N can be stored in the memory of the processing unit 16.

Then, the method preferably comprises step 408 at which the skin effect coefficients SEC(m, i), i=1, ..., N computed at the end of the measurement phase are compared, by the processing unit 16, with the reference skin effect coefficients SEC(R, i), i=1, ..., N. In particular, the first skin effect coefficient SEC(m, 1) computed at the first test frequency f(1) is compared with the reference skin effect coefficient SEC(R, 1) computed at the same first test frequency f(1), and the same operation is repeated for the skin effect coefficients computed at each test frequency f(i), i=2, ..., N. The operation of comparing the skin effect coefficients is preferably performed by the processing unit 16 by computing a difference between each pair of skin effect coefficients as follows: $ΔC \left(i\right) = \left|SEC\left(m, i\right)-SEC\left(R, i\right)\right| , i = 1 , … , N$ where the operator |·| indicates the absolute value. This difference will be indicated as "variation coefficient" ΔC(i), i=1, ..., N).

At step 409, the processing unit 16 preferably evaluates whether for each considered test frequency f(i), i=1, ..., N, the skin effect coefficient SEC(m, i) computed at the end of the measurement phase is similar to the corresponding reference skin effect coefficient SEC(R, i). In particular, the similarity between each pair of skin effect coefficients SEC(m, i) and SEC(R, i), i=1, ..., N, is preferably evaluated by checking the value of the variation coefficient ΔC(i).

The variation coefficient ΔC(i), i=1, ..., N may be indicative of a variation within the structure of the steel wire rope due to wear. Indeed, wear may cause an erosion of the surfaces of the wires or the breaking of one or more wires, which affects the value of the measured resistance. The value of the measured resistance may be affected by the structure variation by a different amount when different frequencies are considered, due to the fact that the skin depth varies with frequency. It is to be noted that a variation in the temperature changes the measured resistance of the steel wire rope; however, if the skin effect coefficient is defined as the ratio of the measured resistances as described above, the temperature variation does not change the ratio as it affects both the values of the resistance by the same factor.

If, at step 409, all the variation coefficients ΔC(i), i=1, ..., N are determined to be substantially equal to zero (namely, equal to zero unless a predefined tolerance ε, which may be equal to 1%), the processing unit 16 preferably determines that the structure of the steel wire rope has not changed over the time interval between the reference measurement phase and the following measurement phase. In this case, at the end of step 409, it is determined that the wear condition of the steel wire rope is acceptable.

If, at step 409, at least one of the variation coefficients ΔC(i), i=1, ..., N is determined to be different from zero, unless a predefined tolerance ε, the processing unit 16 preferably detects a variation within the structure of the steel wire rope that determines a variation of the value of the electrical parameter that has been measured (namely, the resistance, according to the embodiment described so far). In particular, a variation within the structure of the steel wire rope at frequency f(i) can be detected by the processing unit if: $ΔC \left(i\right) > ε ,$ where ε may be equal to about 1%. In this case, all the variation coefficients ΔC(i), i=1, ..., N are further processed by the processing unit 16 and they are associated with a wear level indicative of a wear condition of the steel wire rope (step 410). The wear level is the output of the monitoring method. The wear level may be provided as indicating a residual load of the steel wire rope and/or an expected life. According to some embodiments of the method of the present invention, the wear level indicates the residual load of the steel wire rope.

In particular, determining the wear level of the steel wire rope is preferably performed by the processing unit 16 by implementing a mapping operation at step 410. The mapping operation is configured to associate the set of variation coefficients ΔC(i), i=1, ..., N with the wear level. The mapping operation may be implemented by using a mapping function, which can be implemented as an analytic function or a look-up table (map) or a machine learning algorithm such as a neural network, in particular a feed-forward neural network, to correlate the values of the variation coefficients with wear levels. The mapping function may be determined off-line by using experimental data on the steel wire rope. For instance, in case a feed-forward neural network is used, the weights of the neural network may be determined off-line based on experimental data. Different sets of neural network weights or different maps can be defined for different types of steel wire rope and they may be stored in the memory of the processing unit 16, to be read online immediately after the measurement phase.

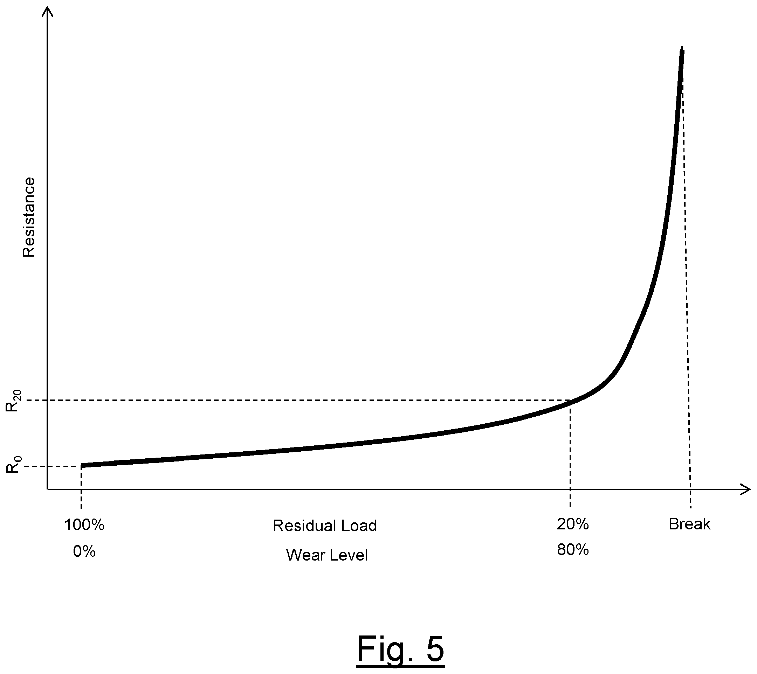

Figure 5 shows an exemplary graph based on experimental data to put in relation the resistance of an exemplary steel wire rope with the residual load (a wear level is also indicated, which is substantially inversely proportional to the residual load). The graph also shows a first value R₀ of resistance corresponding to a residual load of about 100% and a second value R₂₀ of resistance corresponding to a residual load of about 20%. Moreover, it is to be noticed that the abrupt increase in the resistance corresponds to a condition in which there is a break.

In practice, fatigue and aging tests are typically carried out off-line on a given type of steel wire rope over a number of cycles until the steel wire rope breaks. By carrying out measurements during these aging cycles (the effect of aging on the mechanical degradation of the rope is well known), it is possible to extrapolate a relationship between the skin effect coefficients at the considered test frequencies (wherein each skin effect coefficient is determined as the ratio between the test value of resistance measured at the end of the aging cycle and a base value of resistance, as described above) and the residual load. The extrapolated relationship may be "learned" by a neural network or it may be approximated by a look-up table.

Once the wear level is determined, this data can be logged, communicated, or used to generate alarms (by comparing the wear level against a predefined threshold). For instance, by providing the wear level in terms of a residual load, an alarm may be raised if, at the output of the mapping function, the residual load is determined to be below 80%. The output of the monitoring method may be sent by the processing unit 16 to the communication unit 19, which may employ the radio/mobile modem to transmit the data to a remote and/or centralised monitoring platform, where the status and alarms can be observed.

As already anticipated above, the proposed method advantageously exploits the skin effect by measuring the resistance of different circular areas (each extending from the outer surface to the respective skin depth) of the cross section of the steel wire rope when different frequencies are considered. By comparing the skin effect coefficient at a given frequency over time (which is indicative of the resistance associated with a specific circular area of the cross-section of the steel wire rope), it is possible to detect a structural variation located within the specific circular area which led to the variation of the skin effect coefficient value. The sensitivity to variations within the structure of the steel wire rope thus significantly improves.

Advantageously, the method of the present invention is relatively simple to implement, but very precise and repeatable. In particular, the current and voltage level are very low, respectively in the range from 1 mA to 10 mA and from 0.1 V to 5 V. The measurement time is in the order of few seconds and the measurement phase is repeated every few minutes or few hours. This advantageously avoids inducing unwanted damage to the rope (e.g. by heating, by galvanic corrosion, etc). The frequencies that are used are very low, at most in the order of few tens of kHz (the maximum frequency may be 50 kHz). This limits unwanted electromagnetic emission and allows using simple and very high-resolution electronics (24 or more) that are not easily available for higher frequencies (such as the one used by known methods based on an impedance measurement). Since the resistance/impedance variations due to wear are very small compared to the normal rope resistance/impedance, it is important to achieve high resolutions and very low noise data. In fact, the expected variations are in the order of few tens of µΩ (over a rope resistance in the order of 1-10 Ω) in a first stage of the wearing process. The method of the present invention, as mentioned, advantageously allows achieving such high resolution by exploiting the skin effect and also by using the signal projection technique for calculating the resistance, as described above.

## Claims

1. A method for monitoring the wear of a steel wire rope, said steel wire rope including a plurality of steel wires, the method **characterised by** comprising, at a first time:
a) generating a current at a base frequency and determining a first base value of an electrical parameter of the steel wire rope indicating an opposition of said steel wire rope to the passage of said current;
b) generating a current at a test frequency higher than said base frequency and determining a first test value of said electrical parameter of the steel wire rope indicating an opposition of said steel wire rope to the passage of said current;
and, at a second time following said first time:
c) generating a current at said base frequency and determining a second base value of said electrical parameter of the steel wire rope;
d) generating a current at said test frequency and determining a second test value of said electrical parameter of the steel wire rope;
the method further comprising:
e) determining a first coefficient based on said first base value and said first test value of said electrical parameter of the steel wire rope;
f) determining a second coefficient based on said second base value and said second test value of said electrical parameter of the steel wire rope; and
g) determining, using said first coefficient and said second coefficient, a wear level of said steel wire rope.

2. The method according to claim 1, wherein said electrical parameter is an impedance or a resistance of said steel wire rope.

3. The method according to claim 2, wherein each of said determining said first base value, determining said first test value, determining said second base value and determining said second test value of said electrical parameter comprises:
acquiring a voltage across said steel wire rope;
providing an in-phase component of said voltage by multiplying said voltage by said current and integrating over a measurement interval;
providing a quadrature component of said voltage by multiplying said voltage by a 90° phase-shifted version of said current and
integrating over said measurement interval;
providing an amplitude of said voltage based on said in-phase component and said quadrature component of the voltage; and
computing said impedance or resistance as a ratio between said amplitude of the voltage and an amplitude of said current.

4. The method according to any of the preceding claims, wherein said first coefficient is a ratio between said first test value and said first base value of the electrical parameter and said second coefficient is a ratio between said second test value and said second base value of the electrical parameter.

5. The method according to claim 4, wherein said base frequency is a fixed frequency and said test frequency is selected in such a way that said ratio has a fixed value.

6. The method according to any of the preceding claims, wherein the method further comprises:
providing a set of test frequencies comprising a number, N, of test frequencies, N being an integer greater than 1, wherein each test frequency is higher than said base frequency;
at said first time, for each test frequency comprised in said set of test frequencies, performing said step b);
at said second time, for each test frequency comprised in said set of test frequencies, performing step d);
determining, for each test frequency comprised in said set of test frequencies, a respective first coefficient based on said first base value and a respective first test value of said electrical parameter of the steel wire rope and a respective second coefficient based on said second base value and a respective second test value of said electrical parameter of the steel wire rope; and
determining, using said first coefficients and said second coefficients, a wear level of said steel wire rope.

7. The method according to any of the preceding claims, wherein said step g) comprises computing a difference between said first coefficient and said second coefficient and, based on said difference, determining whether a variation within the structure of the steel wire rope has occurred between said first time and said second time.

8. The method according to claim 7, wherein said determining a wear level of said steel wire rope comprises mapping said difference to said wear level by means of any one of: an analytic function, a look-up table, a machine learning algorithm.

9. The method according to any of the preceding claims, wherein said wear level indicates a residual load of said steel wire rope.

10. The method according to any of the preceding claims, wherein the base frequency is selected between 10 Hz and 1 kHz.

11. A system (15) for monitoring the wear of a steel wire rope, the system (15) comprising:
- a processing unit (16); and
- a current generator (17);
**characterised in that**
the current generator (17) is configured to generate a current at a base frequency and to generate a current at a test frequency higher than said base frequency,
wherein said processing unit (16) is configured to:
- determine a base value of an electrical parameter of the steel wire rope indicating an opposition of said steel wire rope to the passage of the current at said base frequency, and a test value of said electrical parameter indicating an opposition of said steel wire rope to the passage of the current at said test frequency, and
- determine a coefficient based on said base value and said test
value of said electrical parameter of the steel wire rope, and wherein said processing unit (16) is further configured to determine a wear level of said steel wire rope using said coefficient as determined at a first time and said coefficient as determined at a second time following said first time.

12. An elevator system comprising a steel wire rope and a monitoring system for monitoring the wear of said steel wire rope according to claim 11.

## Patentansprüche

1. Verfahren zur Überwachung des Verschleißes eines Stahlseils, wobei das Stahlseil eine Vielzahl von Stahldrähten umfasst, wobei das Verfahren **dadurch gekennzeichnet ist, dass** es zu einem ersten Zeitpunkt umfasst:
a) Erzeugen eines Stroms mit einer Grundfrequenz und Ermitteln eines ersten Grundwerts eines elektrischen Parameters des Stahlseils, der einen Widerstand des Stahlseils gegen den Durchfluss des Stroms angibt;
b) Erzeugen eines Stroms bei einer Testfrequenz, die höher ist als die Grundfrequenz, und Ermitteln eines ersten Testwerts des elektrischen Parameters des Stahlseils, der den Widerstand des Stahlseils gegen den Stromdurchfluss angibt; und zu einem zweiten Zeitpunkt, der auf den ersten Zeitpunkt folgt:
c) Erzeugen eines Stroms bei der Basisfrequenz und Ermitteln eines zweiten Basiswerts des elektrischen Parameters des Stahlseils;
d) Erzeugen eines Stroms bei der Testfrequenz und Ermitteln eines zweiten Testwerts des elektrischen Parameters des Stahlseils;
wobei das Verfahren ferner umfasst:
e) Ermitteln eines ersten Koeffizienten auf der Grundlage des ersten Basiswerts und des ersten Testwerts des elektrischen Parameters des Stahlseils;
f) Ermitteln eines zweiten Koeffizienten auf der Grundlage des zweiten Basiswerts und des zweiten Testwerts des elektrischen Parameters des Stahlseils; und
g) Ermitteln eines Verschleißgrades des Stahlseils unter Verwendung des ersten Koeffizienten und des zweiten Koeffizienten.

2. Verfahren nach Anspruch 1, wobei der elektrische Parameter eine Impedanz oder ein Widerstand des Stahlseils ist.

3. Verfahren nach Anspruch 2, wobei jedes der folgenden Verfahren - das Bestimmen des ersten Basiswerts, das Bestimmen des ersten Testwerts, das Bestimmen des zweiten Basiswerts und das Bestimmen des zweiten Testwerts des elektrischen Parameters - Folgendes umfasst:
Erfassen einer Spannung über dem Stahldrahtseil;
Bereitstellen einer gleichphasigen Komponente der Spannung durch Multiplizieren der Spannung mit dem Strom und Integrieren über ein Messintervall;
Ermitteln einer Quadraturkomponente der Spannung durch Multiplikation der Spannung mit einer um 90° phasenverschobenen Version des Stroms und Integrieren über das Messintervall;
Ermitteln einer Amplitude der Spannung auf der Grundlage der In-Phase-Komponente und der Quadraturkomponente der Spannung; und Berechnen der Impedanz oder des Widerstands als Verhältnis zwischen der Amplitude der Spannung und einer Amplitude des Stroms.

4. Verfahren nach einem der vorstehenden Ansprüche, wobei der erste Koeffizient ein Verhältnis zwischen dem ersten Testwert und dem ersten Basiswert des elektrischen Parameters ist und der zweite Koeffizient ein Verhältnis zwischen dem zweiten Testwert und dem zweiten Basiswert des elektrischen Parameters ist.

5. Verfahren nach Anspruch 4, wobei die Basisfrequenz eine feste Frequenz ist und die Testfrequenz so gewählt wird, dass das Verhältnis einen festen Wert aufweist.

6. Verfahren nach einem der vorstehenden Ansprüche, wobei das Verfahren ferner umfasst:
Bereitstellen eines Satzes von Testfrequenzen, der eine Anzahl N von Testfrequenzen umfasst, wobei N eine ganze Zahl größer als 1 ist und jede Testfrequenz höher ist als die Grundfrequenz;
zum ersten Zeitpunkt für jede in dem Satz von Testfrequenzen enthaltene Testfrequenz Durchführen des Schritts b);
zu diesem zweiten Zeitpunkt für jede in der Menge der Testfrequenzen enthaltene Testfrequenz die Durchführung von Schritt d);
für jede in der Menge der Testfrequenzen enthaltene Testfrequenz einen jeweiligen ersten Koeffizienten auf der Grundlage des ersten Basiswerts und eines jeweiligen ersten Messwerts des elektrischen Parameters des Stahlseils sowie einen jeweiligen zweiten Koeffizienten auf der Grundlage des zweiten Basiswerts und eines jeweiligen zweiten Messwerts des elektrischen Parameters des Stahlseils zu bestimmen; und unter Verwendung der ersten Koeffizienten und der zweiten Koeffizienten einen Verschleißgrad des Stahlseils zu bestimmen.

7. Verfahren nach einem der vorstehenden Ansprüche, wobei der Schritt g) das Berechnen einer Differenz zwischen dem ersten Koeffizienten und dem zweiten Koeffizienten sowie das Bestimmen auf der Grundlage dieser Differenz umfasst, ob zwischen dem ersten Zeitpunkt und dem zweiten Zeitpunkt eine Veränderung innerhalb der Struktur des Stahlseils aufgetreten ist.

8. Verfahren nach Anspruch 7, wobei das Bestimmen eines Verschleißgrades des Stahlseils das Abbilden der Differenz auf den Verschleißgrad mittels einer der folgenden Methoden umfasst: Einer analytischen Funktion, einer Nachschlagetabelle oder eines Algorithmus des maschinellen Lernens.

9. Verfahren nach einem der vorstehenden Ansprüche, wobei der Verschleißgrad eine Restbelastung des Stahlseils angibt.

10. Verfahren nach einem der vorstehenden Ansprüche, wobei die Grundfrequenz zwischen 10 Hz und 1 kHz gewählt wird.

11. System (15) zur Überwachung des Verschleißes eines Stahlseils, wobei das System (15) umfasst:
- eine Verarbeitungseinheit (16); und
- einen Stromgenerator (17);
**dadurch gekennzeichnet, dass** der Stromgenerator (17) so ausgelegt ist, dass er einen Strom bei einer Grundfrequenz und zur Erzeugung eines Stroms bei einer Testfrequenz, die höher ist als die Grundfrequenz, wobei die Verarbeitungseinheit (16) so konfiguriert ist, dass sie:
- einen Basiswert eines elektrischen Parameters des Stahlseils, der den Widerstand des Stahlseils gegen den Stromfluss bei der Grundfrequenz angibt, und einen Testwert des elektrischen Parameters, der den Widerstand des Stahlseils gegen den Stromfluss bei der Testfrequenz angibt, ermittelt und
- einen Koeffizienten auf der Grundlage des Basiswerts und des Testwerts des elektrischen Parameters des Stahlseils zu ermitteln, und wobei die Verarbeitungseinheit (16) ferner dazu ausgelegt ist, einen Verschleißgrad des Stahlseils unter Verwendung des zu einem ersten Zeitpunkt ermittelten Koeffizienten und des zu einem zweiten Zeitpunkt, der auf den ersten Zeitpunkt folgt, ermittelten Koeffizienten zu ermitteln.

12. Aufzugssystem mit einem Stahlseil und einem Überwachungssystem zur Überwachung des Verschleißes des Stahlseils gemäß Anspruch 11.

## Revendications

1. Procédé pour surveiller l'usure d'un câble en acier, ledit câble en acier comportant une pluralité de fils d'acier, le procédé étant **caractérisé en ce qu'**il comprend, à un premier moment :
a) la génération d'un courant à une fréquence de base et la détermination d'une première valeur de base d'un paramètre électrique du câble en acier indiquant une opposition dudit câble en acier au passage dudit courant ;
b) la génération d'un courant à une fréquence d'essai supérieure à ladite fréquence de base et la détermination d'une première valeur d'essai dudit paramètre électrique du câble en acier indiquant une opposition dudit câble en acier au passage dudit courant ;
et, à un second moment suivant ledit premier moment :
c) la génération d'un courant à ladite fréquence de base et la détermination d'une seconde valeur de base dudit paramètre électrique du câble en acier ;
d) la génération d'un courant à ladite fréquence d'essai et la détermination d'une seconde valeur d'essai dudit paramètre électrique du câble en acier ;
le procédé comprenant en outre :
e) la détermination d'un premier coefficient sur la base de ladite première valeur de base et de ladite première valeur d'essai dudit paramètre électrique du câble en acier ;
f) la détermination d'un second coefficient sur la base de ladite seconde valeur de base et de ladite seconde valeur d'essai dudit paramètre électrique du câble en acier ; et
g) la détermination, à l'aide dudit premier coefficient et dudit second coefficient, d'un niveau d'usure dudit câble en acier.

2. Procédé selon la revendication 1, dans lequel ledit paramètre électrique est une impédance ou une résistance dudit câble en acier.

3. Procédé selon la revendication 2, dans lequel chacune de ladite détermination de ladite première valeur de base, détermination de ladite première valeur d'essai, détermination de ladite seconde valeur de base et détermination de ladite seconde valeur d'essai dudit paramètre électrique comprend :
l'acquisition d'une tension à travers ledit câble en acier ;
la fourniture d'une composante en phase de ladite tension en multipliant ladite tension par ledit courant et en l'intégrant sur un intervalle de mesure ;
la fourniture d'une composante de quadrature de ladite tension en multipliant ladite tension par une version déphasée à 90° dudit courant et en l'intégrant sur ledit intervalle de mesure ;
la fourniture d'une amplitude de ladite tension sur la base de ladite composante en phase et de ladite composante de quadrature de la tension ; et le calcul de ladite impédance ou résistance comme un rapport entre ladite amplitude de la tension et une amplitude dudit courant.

4. Procédé selon l'une quelconque des revendications précédentes, dans lequel ledit premier coefficient est un rapport entre ladite première valeur d'essai et ladite première valeur de base du paramètre électrique et ledit second coefficient est un rapport entre ladite seconde valeur d'essai et ladite seconde valeur de base du paramètre électrique.

5. Procédé selon la revendication 4, dans lequel ladite fréquence de base est une fréquence fixe et ladite fréquence d'essai est sélectionnée de manière à ce que ledit rapport ait une valeur fixe.

6. Procédé selon l'une quelconque des revendications précédentes, dans lequel le procédé comprend en outre :
la fourniture d'un ensemble de fréquences d'essai comprenant un nombre, N, de fréquences d'essai, N étant un nombre entier supérieur à 1, dans lequel chaque fréquence d'essai est supérieure à ladite fréquence de base ;
audit premier moment, pour chaque fréquence d'essai comprise dans ledit ensemble de fréquences d'essai, la réalisation de ladite étape b) ;
audit second moment, pour chaque fréquence d'essai comprise dans ledit ensemble de fréquences d'essai, la réalisation de l'étape d) ;
la détermination, pour chaque fréquence d'essai comprise dans ledit ensemble de fréquences d'essai, d'un premier coefficient respectif sur la base de ladite première valeur de base et d'une première valeur d'essai respective dudit paramètre électrique du câble en acier et d'un second coefficient respectif sur la base de ladite seconde valeur de base et d'une seconde valeur d'essai respective dudit paramètre électrique du câble en acier ; et
la détermination, à l'aide desdits premiers coefficients et desdits seconds coefficients, d'un niveau d'usure dudit câble en acier.

7. Procédé selon l'une quelconque des revendications précédentes, dans lequel ladite étape g) comprend le calcul d'une différence entre ledit premier coefficient et ledit second coefficient, et, sur la base de ladite différence, la détermination si une variation dans la structure du câble en acier s'est produite entre ledit premier moment et ledit second moment.

8. Procédé selon la revendication 7, dans lequel ladite détermination d'un niveau d'usure dudit câble en acier comprend la cartographie de ladite différence par rapport audit niveau d'usure au moyen de l'un quelconque parmi : une fonction analytique, une table de recherche, un algorithme d'apprentissage automatique.

9. Procédé selon l'une quelconque des revendications précédentes, dans lequel ledit niveau d'usure indique une charge résiduelle dudit câble en acier.

10. Procédé selon l'une quelconque des revendications précédentes, dans lequel la fréquence de base est sélectionnée entre 10 Hz et 1 kHz.

11. Système (15) pour surveiller l'usure d'un câble en acier, le système (15) comprenant :
- une unité de traitement (16) ; et
- un générateur de courant (17) ;
**caractérisé en ce que** le générateur de courant (17) est configuré pour générer un courant à une fréquence de base et pour générer un courant à une fréquence d'essai supérieure à ladite fréquence de base,
dans lequel ladite unité de traitement (16) est configurée pour :
- déterminer une valeur de base d'un paramètre électrique du câble en acier indiquant une opposition dudit câble en acier au passage du courant à ladite fréquence de base, et une valeur d'essai dudit paramètre électrique indiquant une opposition dudit câble en acier au passage du courant à ladite fréquence d'essai, et
- déterminer un coefficient sur la base de ladite valeur de base et de ladite valeur d'essai dudit paramètre électrique du câble en acier, et
dans lequel ladite unité de traitement (16) est en outre configurée pour déterminer un niveau d'usure dudit câble en acier à l'aide dudit coefficient tel que déterminé à un premier moment et dudit coefficient tel que déterminé à un second moment suivant ledit premier moment.

12. Système d'ascenseur comprenant un câble en acier et un système de surveillance pour surveiller l'usure dudit câble en acier selon la revendication 11.
